# EUROPEAN PATENT SPECIFICATION

(11) **EP 4 244 190 B1**
(45) Date of publication and mention of the grant of the patent: **27.11.2024**
(21) Application number: 21807106.6
(22) Date of filing: 11.11.2021
(51) Int. Cl.: C02F 1/00, C02F 3/06, C02F 1/32, C02F 103/00, C02F 3/00, B01D 24/24

(54) **SLOW SAND WATER FILTER SUITABLE FOR OFF-GRID USE**
LANGSAMER SANDWASSERFILTER FÜR OFF-GRID-VERWENDUNG
FILTRE À EAU À SABLE LENT ADAPTÉ À UNE UTILISATION HORS RÉSEAU

(30) Priority: 12.11.2020 SE 2051320
(43) Date of publication of application: 20.09.2023
(73) Proprietor: RAINWELL AB, 125 40 Älvsjö (SE)
(72) Inventor: TORGRIP, Ralf, 125 40 Älvsjö (SE)
(74) Representative: AWA Sweden AB
(86) International application number: PCT/EP2021/081365
(87) International publication number: WO 2022/101332

(56) References cited:
- DE-U1- 20 100 070
- GB-A- 2 413 292
- US-A- 3 817 378
- US-A- 5 993 672
- US-A- 5 997 750
- US-A1- 2010 018 913
- US-A1- 2010 292 844

## Description

### Technical field

The present disclosure relates to a slow sand filter and an autonomous system for providing potable water off-grid, i.e. using a small amount of energy.

### Background

Clean water is essential to humans and many people live in regions where potable water is not readily available. Solutions exist for cleaning sea water or other sources of raw water to make it potable. However, is has proven difficult to provide such a system which can be used off-grid where electric energy may not be readily available and to provide a system which is inexpensive and does not require frequent maintenance and spare parts. Some filtration systems use slow sand filters, and these are working best after the formation of a so called biolayer. However, periods of draught leads to starvation of the biolayer, resulting in inadequate filtering of water and risk of contamination.

US5993672A and GB2413292A both relate to slow sand filters with a biolayer that forms at the top of the sand layer and a diffuser plate for water distribution provided above the sand layer.

### Summary

Accordingly, an object of the invention is to provide an improved slow sand filter. A further object is to provide an improved system for providing potable water from a raw water source, using little energy and capable of autonomous operation for securely creating potable water.

A first aspect of the present invention relates to a slow sand filter. The slow sand filter comprises an inlet for water to be filtered; an overflow outlet for overflow of filtered water at a filter water overflow level (L1); a fluid path between the inlet and the overflow outlet, wherein filter media is provided throughout the fluid path for filtering of water flowing from the inlet to the overflow outlet; a biolayer formed on top of the filter media; an outer container and an inner wall structure provided inside the outer container wherein the outer container and the inner wall structure together define a meandering fluid path portion of the fluid path between the inlet andthe overflow outlet, wherein the inner wall structure is funnel-shaped with a wider upper portion and a narrower lower portion emanating in a lower portion of the outer container, and wherein the overflow outlet is provided in an upper portion of the outer container, and a diffuser for incoming water, wherein the diffuser comprises a sheet layer having a lower density than water and wherein the sheet layer is shaped to fit within the inlet of the slow sand filter such that the sheet layer is capable of floating above the filter media on top of the water and above any biolayer formed on said filter media, wherein the diffuser is provided with a plurality of holes for water to flow through on its way from the inlet to the filter media.

Water is fed into the inlet of the slow sand filter. The water flows through the filter media until the water level in the slow sand filter reaches the overflow outlet wherein any additional water fed into the slow sand filter causes overflow of water through the overflow outlet. The filter media filters the water from particles. Some time after water has been circulated through the slow sand filter, a biolayer/schmutzdecke will form on top of the filter media. The biolayer binds contaminants in the water filtered such as bacteria, organic compounds and dissolved metals, and once a healthy biolayer has formed, the slow sand filter is able to produce potable water

The filter water overflow level may be higher than the top of the filter media.

Since the overflow level of the outlet is higher than the top of the filter media, a water volume will be formed on top of the filter media as the slow sand filter is filled with water, which in turn promotes formation of a biolayer over the filter media.

The slow sand filter comprises an outer container and an inner wall structure provided inside the outer container, wherein the outer container and the inner wall structure together define a meandering fluid path portion of said fluid path between the inlet and the overflow outlet. The meandering nature of the fluid path ensures that the water does not choose the shortest possible path between the inlet and the outlet and therefore improves filtration effect in the existing amount of filtration media provided throughout the fluid path. This in turn enables a longer fluid path in a lower container height and works well with gravity-fed water flow. By the term "meandering fluid path" it is here meant the non-linear course followed by the water through filter media provided throughout the fluid path.

The inner wall structure is be funnel-shaped with a wider upper portion and a narrower lower portion emanating in a lower portion of the outer container, and wherein the overflow outlet is provided in an upper portion of the outer container. By providing the outlet in the upper portion of the outer container and letting the inner wall structure emanate in the lower portion of the outer container, a long meandering fluid path is provided. The meandering fluid path is further advantageous in that it at least doubles the filtering capacity of the slow sand filter in that the minimum path traveled by the water is construed by twice the length of the funnel shaped inner wall structure. In other words, the water must travel through the funnel shaped inner wall structure, exit out of the narrower lower portion and travel upwards to the overflow outlet. The funnel shape also provides for a large biolayer area in the top of the filter and lower flow rate through the biolayer, which increases the efficiency of the filter.

The slow sand filter further comprises a diffuser for incoming water, wherein the diffuser comprises a sheet layer having a lower density than water and wherein the sheet layer is shaped to fit within the inlet of the slow sand filter such that the sheet layer is capable of floating above the filter media on top of the water and above any biolayer formed on said filter media.

The diffuser is provided with a plurality of holes for water to flow through on its way from the inlet to the filter media. The floating nature of the diffuser sheet layer enables it to stay on top of the water over the filter media such that the diffuser receives incoming water which bounces on the floating sheet layer and flows through the plurality of holes before gently flowing towards and through the biolayer below the diffuser without disturbing the biolayer. The floating nature of the diffuser is further advantageous in that the diffuser also protects the biolayer from being disturbed by the impact of the water flowing through the holes of the diffuser. In fact, the floating nature of the diffuser enables the diffuser to be constantly in contact with the surface of the water regardless of the level of water in the filter, resulting in the minimization of the impact of incoming water on the biolayer after flowing through the holes of the diffuser. Furthermore, the provision of such a diffuser is simple and inexpensive and can be made as an upgrade of many sorts of existing slow sand filters.

A second aspect of this disclosure relates to a water treatment system. The water treatment system comprises:
a raw water container suitable for receiving and holding raw water to be treated,
a slow sand filter as described above,
a potable water container suitable for receiving and holding potable water,
a pump configured to pump water from the raw water container to the inlet of the slow sand filter,
a UV-light sanitizer connected to the overflow outlet of the slow sand filter,
a water quality sensor connected to an outlet of the UV-light sanitizer, and
a valve assembly connected to the water quality sensor and configured to selectively, based on a control signal, direct filtered water downstream of the water quality sensor either
   a) to a first fluid path to the raw water container, or
   b) to a second fluid path to the potable water container.

Raw water is collected in the raw water container from any suitable source of water such as rain water. The pump pumps water from the raw water container to the slow sand filter where the water is filtered. Before the slow sand filter is fully able to clean the water, a biolayer has to form on top of the filter media. The UV-sanitizer is provided between the slow sand filter and the potable water container so that any contaminated water exiting the slow sand filter is sanitized using UV-light to kill pathogens in the water.

The water treatment system may further comprise a controller configured to determine, based on information from the water quality sensor, if the water currently flowing through the water quality sensor is potable or not potable and to control the valve assembly such that filtered water is routed to the potable water container if the filtered water is determined to be potable and such that filtered water is otherwise routed back to the raw water container.

Rain water or some other source of raw water is introduced into the filter container either directly or via the raw water container using the pump. The raw water flows through the slow sand filter by the force of gravity and once the water level of the filter container is high enough the water flows out through the outlet of the filter container. From the outlet of the filter container, the filtered water flows through the UV-sanitizer which kills possible remaining pathogens in the water. Filtering the water before passing it through the UV-sanitizer prevents suspended particles from shielding pathogens from the UV-light, and thereby greatly increases the reliability of the UV-sanitation step. Since the performance of the sand filter may vary, for example due to the biolayer not having had time to form or ripen, the quality of water leaving the outlet of the filter container may vary and to account for this and prevent such variations of the filtered water to contaminate already cleaned potable water in the potable water container, the valve assembly is used to selectively direct potable water to the potable water container and non-potable water back to the raw water container based on information from the water quality sensor which is configured to analyze water after the UV-light sanitizer. Altogether, such a water treatment system is able to bring the biolayer to life by circulating contaminated water through the filter via the raw water container without contaminating potable water already in the potable water container.

The potable water container may be provided with an overflow outlet fluidly connected to the raw water container for overflow at a potable water overflow level, and the raw water container may be provided with an overflow outlet for overflow at a raw water overflow level which is lower than the potable water overflow level.

The overflow connection between the potable water container and the raw water container establishes a maximum water level in the potable water container and then recycles any excess water to the raw water container rather than wasting it. By providing the raw water container with an overflow outlet, a maximum water level is established in the raw water container, and since the raw water overflow level is lower than the potable water overflow level, water cannot flow back from the raw water container into the potable water container. This ensures that water from the raw water container cannot contaminate potable water in the potable water container.

The filter water overflow level may be higher than the potable water overflow level.

In this embodiment, the filter water overflow level is higher than the potable water overflow level, which is higher than the raw water overflow level. Except for preventing contamination of the potable water with raw water from the raw water container at overflow of the raw water container, such a configuration prevents water from running from the potable water container back to the slow sand filter. The configuration also enables the use of only one water pump for the whole system, since water can flow from the inlet of the slow sand filter to both the potable water container and to the raw filter container. Using only one pump makes the system less complicated and thus more reliable and suitable for use off-grid. Also, power consumption is low. The slow sand filter could even be refilled manually with raw water or fed directly with rain water from above and still allow the water to be filtered, UV-sanitized, analyzed and directed to the potable water container or to the raw water container with no need of pumping the water between the filter and the containers.

The first fluid path may emanate at a third water level in the raw water container, wherein the third water level is above the raw water overflow level and below the potable water overflow level.

The maximum water level of the raw water container is determined by the fourth water level where the overflow outlet of the raw water container is provided. By arranging the third water level above the fourth water level raw water cannot flow backwards from the raw water container towards the valve assembly through the first fluid path, thereby mitigating contamination of water in the valve assembly and in the potable water container.

The slow sand filter may be provided with a first water level sensor configured to determine at least if the water level is above a predetermined lower filter water level and optionally to also detect if the water level is above a predetermined upper filter water level, wherein the controller is configured to activate the pump upon detecting that the water level is below the lower filter water level, wherein the controller is configured to deactivate the pump either after a predetermined period of time has elapsed, or upon detecting that the water level has reached a predetermined upper filter water level should the first water level sensor also be configured to determine if the water level exceeds the upper filter water level. Such operation of the pump promotes growth and survival of a biolayer on top of the filter media in the slow sand filter by ensuring enough new raw water is still present on top of the filter media for the biolayer to survive. By deactivating the pump as claimed, energy is also conserved without endangering the health of the biolayer.

The raw water container may be provided with a second water level sensor configured to determine at least if the water level in the raw water container exceeds or subceeds a predetermined lower raw water level, wherein the controller is configured to disable operation of the pump upon said water level subceeding the lower raw water level. The controller may further be configured to enable operation of the pump either after a predetermined second period of time or upon said second water level sensor detecting that the water level exceeds the lower raw water level.

Running the pump when no water is left in the raw water container would be a waste of energy. By disabling operation of the pump, activation and operation of the pump is prevented. By selectively disabling the pump based on the current water level in the raw water container as reported by the second sensor, energy is saved when the raw container runs out of water as the pump will not run dry.

The first water level sensor may also be configured to detect if the water level is above the predetermined upper filter water level, and the controller configured to measure the dwell time needed for the actual water level to sink from the upper filter water level to the predetermined lower filter water level.

The dwell time has many uses, such as to predict how long it will take to produce a given amount of potable water. Also, the dwell time is useful for calculating the flow of water out of the slow sand filter and thus the flow of water through the UV-sanitizer.

The controller may be configured to determine a health parameter for the health biolayer based on the dwell time.

When the biolayer is dead or non-existing, water flow through the slow sand filter is higher than when the biolayer is healthy, since a healthy biolayer restricts fluid flow through the slow sand filter. Hence, by measuring the dwell time as claimed, it is possible to determine the current health of the biolayer.

The controller may be configured to control the UV-light sanitizer at least based on the health parameter such that the UV-light sanitizer is disabled when the health parameter indicates that the biolayer is healthy.

The UV-light can be used to kill pathogens in the water as needed but with a healthy biolayer there is no need of using the UV-light sanitizer since the biolayer already produces potable water. Accordingly, energy is saved by disabling the UV-light when the biolayer is deemed healthy.

The controller may also be configured to disable the UV-light sanitizer when there is no flow of water through the UV-light sanitizer.

When there is no flow of water through the UV-light sanitizer, there is no need to keep the UV-light turned on. Accordingly, by determining or estimating if water is flowing through the UV-light sanitizer and disabling the UV-light sanitizer when there is no flow through the UV-light sanitizer, unnecessary use of energy for the UV-light sanitizer is prevented. Flow of water through the UV-light sanitizer can be determined or estimated in any suitable way, such as by keeping track of the water level in the slow sand filter, the amount of water pumped into the slow sand filter, and the flow rate through the slow sand filter, or by employing a water flow sensor before or after the UV-light sanitizer, such as by the outlet of the slow sand filter.

The controller may be configured to measure time elapsed from when the slow sand filter was last cleaned and to emit a cleaning signal when the time elapsed is greater than a predetermined cleaning alert interval.

The signal emitted when the cleaning alert interval has elapsed enables efficient maintenance of the slow sand filter such that the performance of the slow sand filter is maintained over time whilst avoiding unnecessary cleaning and thus unnecessary disturbance of the biolayer.

The cleaning signal can be triggered by the health parameter; If the filter gets clogged the dwell time will increase and indicate that cleaning must be performed.

The water quality sensor comprises a Total Dissolved Solids (TDS)-sensor and/or a nephelometer and or a pH-meter.

The controller may further be:
a) configured to keep track of the average age of water in the potable water container and to activate the pump if the average age is higher than a predetermined age limit, or
b) configured to activate the pump according to a predetermined operation pattern in order to circulate water through the potable water container.

When water stands still in the potable water container its quality decreases over time. By operating the pump according to a predetermined operation pattern in order to circulate water through the potable water container, water exchange in the potable water container is achieved by feeding more potable water into the potable water tank until reaching the potable water overflow level so that tank circulation is achieved

The pump is operated at predetermined interval(s), feeding water from the raw water container to the biolayer in the slow sand filter to thereby improve the health of the biolayer by nurturing the biolayer. Alternatively, water is circulated through the potable water container based on the average age of water in the potable water container. The average age for example being determined by monitoring the use of the pump to keep track of how much water is fed to the slow sand filter, and thus indirectly how much is fed to the potable water container via the first valve assembly. The potable water container may be provided with a third water level sensor configured to determine at least if the water level in the potable water container exceeds or subceeds a predetermined lower potable water level. The pump may be activated when the third water level sensor indicates that water is drawn from the potable water container upon when the pump is started, and the filter is immediately filled. This ensures utilizing maximum capacity of the filter.

The predetermined operation pattern may comprise a rest period followed by a running period for raising the water level in the slow sand filter to the upper filter water level. The operating procedure can be determined from the health parameter and or the third water level sensor.

The water treatment system may further comprise a solar panel and an energy storage connected to the solar panel for storing energy created by the solar panel, wherein the water treatment system is energized using power from the solar panel and/or the energy storage.

The provision of a solar panel and an energy storage connected to the solar panel enables true off-grid operation of the water treatment system.

### Brief description of drawings

Fig. 1 schematically shows a first embodiment of a water treatment system.
Fig. 2 shows a side view of the diffuser used in the water treatment system of fig. 1.
Fig. 3 shows a top view of the diffuser used in the water treatment system of fig. 1.

| | | | |
|---|---|---|---|
| 1 | slow sand filter | 16 | first valve assembly |
| 2 | inlet of slow sand filter | 17 | controller |
| 3 | overflow outlet | 18 | plurality of holes of diffuser |
| 4 | fluid path | 19 | first water level sensor |
| 5 | filter media | 20 | second water level sensor |
| 6 | outer container | 21 | third water level sensor |
| 7 | inner wall structure | L1 | filter water overflow level |
| 8 | diffuser | L2 | potable water overflow level |
| 9 | sheet of diffuser | L3 | third water level |
| 10 | water treatment system | L4 | raw water overflow level |
| 11 | raw water container | FTH | upper filter water level |
| 12 | potable water container | FTL | lower filter water level |
| 13 | pump | PTL | lower potable water level |
| 14 | UV-liqht sanitizer | RTL | lower raw water level |
| 15 | water quality sensor | | |

### Detailed description

An embodiment of a slow sand filter and a first embodiment of a water treatment system incorporating such a slow sand filter will hereinafter be described with reference to the appended drawings.

In this embodiment, the slow sand filter 1 comprises an inlet 2 for water to be filtered,
an overflow outlet 3 for overflow of filtered water at a filter water overflow level L1, and
a fluid path 4 between the inlet 2 and the overflow outlet 3. A filter media 5, such as sand and/or crushed rock, is provided throughout the fluid path 4 for filtering of water flowing from the inlet 2 to the overflow outlet 3. In other embodiments, any other suitable granular filter media could alternatively be used instead of sand

The filter water overflow level L1 is 2 cm higher than the top of the filter media 5 but in other embodiments the height of the overflow level L1 may alternatively be higher or lower as appropriate, as long as the biolayer is protected from drying or starving due to too low height of the overflow level L1 or too high height of the overflow level L1 causing oxygen starvation of the biolayer. As shown, the overflow level L1 is not necessarily determined by the vertical position of the outlet hole of the slow sand filter but rather determined by the highest point of the fluid path connected to the outlet. However, rather than a goose-neck tubing after the outlet, as shown, the hose is typically connected to the outlet hole and then leading obliquely down to the UV-light sanitizer such that the highest overflow level L1 is determined by the vertical position of the outlet hole.

Since the overflow level of the outlet is higher than the top of the filter media, a water volume will be formed on top of the filter media as the slow sand filter is filled with water, which in turn promotes formation of a biolayer over the filter media. Another word for biolayer is schmutzdecke (German).

The slow sand filter 1 comprises an outer container 6 and an inner wall structure 7 provided inside the outer container 6. The outer container and the inner wall structure may be made from the same material or from different materials. The material of choice in this embodiment is a suitable plastic, such as HDPE but could in other embodiments alternatively be any other suitable material. The outer container 6 and the inner wall structure 7 together define a meandering fluid path portion of said fluid path 4 between the inlet 2 and the overflow outlet 3. The meandering nature of the fluid path ensures that the water does not flow directly from the inlet to the outlet but rather follows a longer fluid path through the filter media. This in turn enables a longer fluid path in a lower container height and works well with gravity-fed water flow.

The inner wall structure 7 is funnel-shaped with a wider upper portion and a narrower lower portion emanating in a lower portion of the outer container 6. The funnel shape is axisymmetric about a vertical axis although any other suitable shape of the inner wall structure, such as cylindrical, is alternatively possible in other embodiments not part of the present invention.

The overflow outlet 3 is provided in an upper portion of the outer container 6. By providing the outlet in the upper portion of the outer container and letting the inner wall structure emanate in the lower portion of the outer container, a long meandering fluid path is provided. The funnel shape provides for a large biolayer area and lower flow rate through the biolayer, which is good for the efficiency of the slow sand filter 1. This embodiment of the slow sand filter 1 is easy to assemble and fill with sand or other granular filter media. Hence, the term slow sand filter as used herein refers to a filter filled with a granular filter media and should not be construed as limited to a filter filled with sand as the filter media. Hence, the term slow sand filter could be used interchangeably with the alternative term *granular filter media filter.*

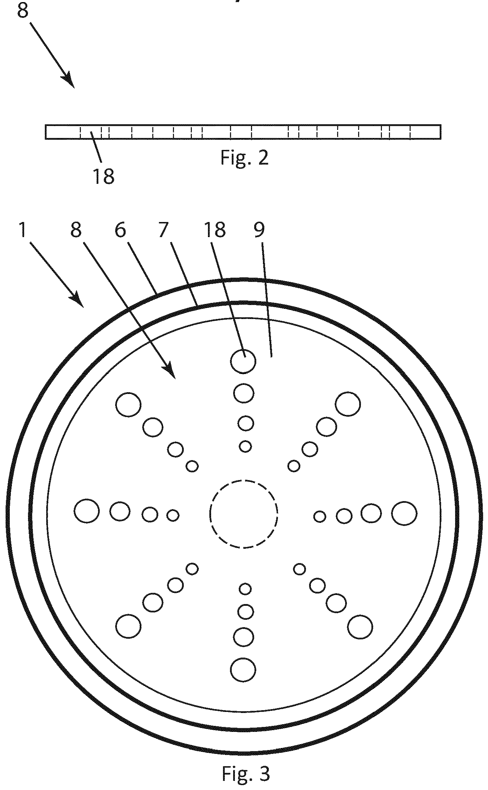

The slow sand filter 1 comprises a diffuser 8 for incoming water. The diffuser 8 comprises a sheet layer 9 having a lower density than water. The sheet layer 9 is shaped to fit within the inlet 2 of the slow sand filter 1 such that the sheet layer 9 is capable of floating above the filter media 5 on top of water and above any biolayer formed on said filter media 5. In this embodiment, the sheet layer is circular/cylindrical as shown in figs 2 and 3 but in other embodiments any other suitable shape could alternatively be employed, such as pentagonal or rectangular. The diffuser 8 is provided with a plurality of holes 18 for water to flow through on its way from the inlet 2 to the filter media 5. The diffuser sheet layer 9 could be made of EPS but could alternatively be made of any other suitable material.

The floating nature of the diffuser enables it to stay on top of the water over the filter media such that the diffuser receives incoming water which bounces on the floating sheet layer and flows through the plurality of holes before gently flowing towards and through the biolayer below the diffuser without mechanically disturbing the biolayer. The provision of such a diffuser is simple and inexpensive and can be made as an upgrade of many sorts of existing slow sand filters.

The water treatment system 10 comprises a raw water container 11 suitable for receiving and holding raw water to be treated. The water treatment system 10 also comprises the slow sand filter 1 described above. Also, the water treatment system 10 comprises a potable water container 12 suitable for receiving and holding potable water, a pump 13 configured to pump water from the raw water container 11 to the inlet 2 of the slow sand filter 1, a UV-light sanitizer 14 connected to the overflow outlet 3 of the slow sand filter 1, a water quality sensor 15 connected to the outlet of the UV-light sanitizer 14, and a first valve assembly 16 connected to the water quality sensor 15. The valve assembly 16 is configured to selectively, based on a control signal, direct filtered water downstream of the water quality sensor 15 either a) to a first fluid path to the raw water container 11, or b) to a second fluid path to the potable water container 12. The potable water container 12 is provided with a lower outlet (not shown in figures) through which potable water may be taken for use. Instead of a lower water outlet, a pump and an outlet hose may be lowered into the potable water container to pick up water for use and feed it through the outlet hose. The first fluid path is provided by means of a pipe or tube extending horizontally from the valve assembly 16 to the raw water container 11. The second fluid path is provided by a pipe extending upwards which then is directed downwards to the potable water tank 12. However, any other suitable routing of the first and second fluid paths are alternatively feasible, bearing in mind that it is advantageous to keep the paths routed such that the feed of water from the slow sand filter 1 to the potable water tank and further to the raw water tank 11 still works using gravity only as otherwise additional pumps would be needed

The water treatment system 10 further comprises a controller 17 configured to determine the water quality based on information from the water quality sensor 15. The controller determines if the water currently flowing through the water quality sensor 15 is potable or not potable and then controls the valve assembly 16 such that the filtered water is routed to the potable water container 12 if the filtered water is determined to be potable and such that filtered water is otherwise routed to the raw water container 11. The controller is a single Arduino computer which operates the pump and the UV-light sanitizer and is connected to the sensors. However, the controller could in other embodiments alternatively be any other suitable computing unit or distributed system of a plurality of controllers or computing units with control logic implemented in software and/or in hardware, as appropriate. The controller may further be provided with radio communication means such that remote monitoring and control of the water treatment system 10 is enabled.

The potable water container 12 is provided with an overflow outlet fluidly connected to the raw water container 11 for overflow at a potable water overflow level L2. Also, the raw water container 11 is provided with an overflow outlet for overflow at a raw water overflow level L4 which is lower than the potable water overflow level L2.

The filter water overflow level L1 is higher than the potable water overflow level L2.

The first fluid path emanates at a third water level L3 in the raw water container. The third water level L3 is above the raw water overflow level L4 and below the potable water overflow level L2.

The slow sand filter 1 is provided with a first water level sensor 19 configured to determine if the water level is above a predetermined lower filter water level FTL and to also detect if the water level is above a predetermined upper filter water level FTH. The controller 17 is configured to activate the pump 13 upon detecting that the water level is below the lower filter water level FTL. Also, the controller 17 is configured to deactivate the pump 13 upon detecting that the water level has reached the predetermined upper filter water level FTH. In other embodiments, the first water level sensor may alternatively be simplified by not providing for upper water level readings at the upper filter water level FTH wherein the filling of the filter rather has to be based on knowledge of pump rate capacity and filter volume available above the lower filter water level FTL.

The raw water container 11 is provided with a second water level sensor 20 configured to determine at least if the water level in the raw water container 11 exceeds or subceeds a predetermined lower raw water level RTL. The controller 17 is configured to disable operation of the pump 13 upon said water level subceeding the lower raw water level RTL, thereby mitigating dry-running of the pump 13 and associated waste of electrical energy for running the pump 13.The controller is also configured to enable operation of the pump upon said second water level sensor 20 detecting that the water level exceeds the lower raw water level RTL.

The controller 17 is configured to measure the so called 'dwell time' defined as the time needed for the water in the filter to sink from the upper filter water level FTH to the predetermined lower filter water level FTL. Also, the controller 17 is configured to determine a health parameter for the health of the biolayer based on the dwell time. When the biolayer is dead or non-existing, water flow through the slow sand filter 1 is higher than when the biolayer is healthy, since a healthy biolayer restricts fluid flow through the slow sand filter 1. Hence, by determining the dwell time it is possible to estimate the current health of the biolayer.

The controller 17 is configured to control the UV-light sanitizer 14 at least based on the health parameter such that the UV-light sanitizer 14 is disabled when the health parameter indicates that the biolayer is healthy.

The controller 17 is further configured to disable the UV-light sanitizer 14 when there is no flow of water through the UV-light sanitizer 14. One specific way of estimating whether or not there is a flow of water through the UV-light sanitizer 14 is to study the water level in the slow sand filter 1 and assume that when the water level sinks to the lower filter water level FTL, there will still be a flow of water through the UV-light sanitizer 14 a predetermined time which could be chosen dynamically based on current dwell time of the filter or based on a static time chosen long enough to ensure no water flows past the UV-light sanitizer after the predetermined time has elapsed, then the UV-light sanitizer is turned off. Alternatively, a water flow meter/detector may be provided upstream or downstream of the UV-light sanitizer. The water flow meter/detector must not necessarily report flow rate, but it often suffices that the water flow meter/detector reports that a water flow past the UV-light sanitizer is present/not present. Alternatively, the output from UV-light sanitizer 14 can be used to determine if there is flow of water since a water flow past possible UV-light detectors in the UV-light sanitizer will create a fluctuating signal.

The controller 17 is configured to measure time elapsed from when the slow sand filter 1 was last cleaned and to emit a cleaning signal when the time elapsed is greater than a predetermined cleaning alert interval. The signal can be an audible signal, a visual signal and/or a radio signal.

The water quality sensor 15 comprises a Total Dissolved Solids (TDS)-sensor and a nephelometer and a pH-meter but could in other embodiments alternatively comprise any one or more other sensor(s) suitable for determining water quality related to the potability of the water.

The controller 17 is configured to activate the pump 13 according to a predetermined operation pattern in order to circulate water through the potable water container. The predetermined operation pattern comprises a rest period of 0-6 hours followed by a running period for maintaining or raising the water level in the slow sand filter 1 to the upper filter water level FTH. The repeated running of the pump 13 ensures there is a recurring supply or water, nutrients and oxygen to the slow sand filter 1 such that the biolayer thrives and does not die, whilst at the same time enabling lower power consumption and wear by enabling the pump to rest. However, the predetermined operation pattern may alternatively be any other suitable pattern of run-time and rest-time. Also, instead of relying of a predetermined pattern, the controller 17 may be configured to keep track of the average age, or minimum age, of water in the potable water container 12 and to activate the pump 13 if the average age/minimum age is higher than a predetermined age limit, for example twenty-four hours.

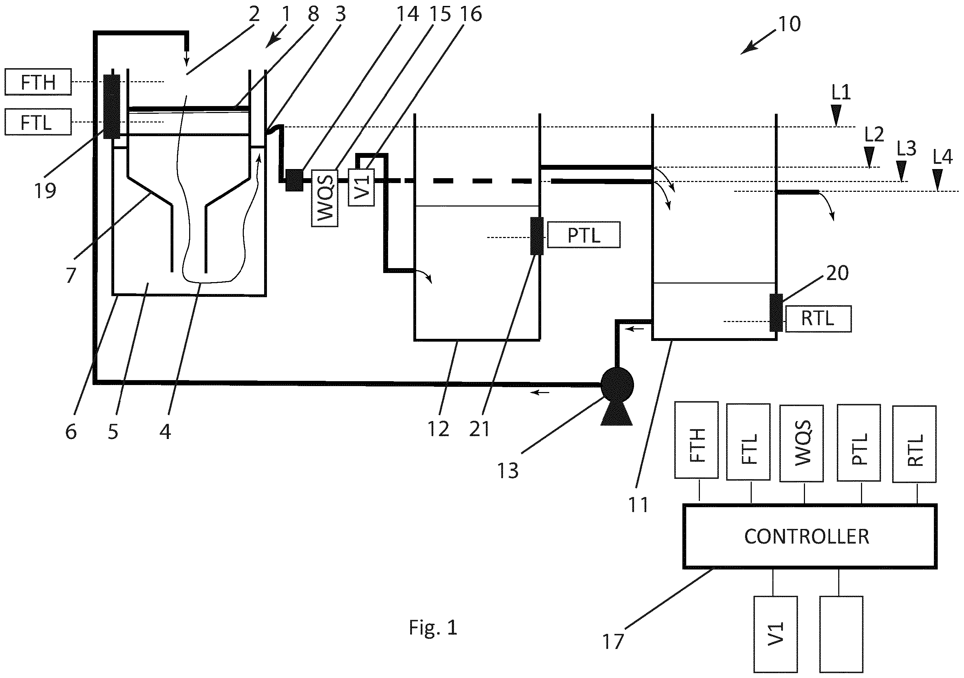

The water treatment system is also provided with an optional third water level sensor 21 configured to determine if the water level in the potable water container 12 is above a predetermined lower potable water level PTL or not, as shown in Fig. 1. The controller 17 is configured to control the pump 13 such that when the third water level sensor 21 detects that if the water level in the potable water tank is below the lower potable water level PTL, the pump 13 is turned on to pump water from the raw water tank 11 to the slow sand filter 1 in order to refill the potable water tank 12. In other embodiments, the third water level sensor 21 may be omitted.

The water treatment system 10 comprises a solar panel (not shown) and an energy storage (not shown) connected to the solar panel for storing energy created by the solar panel. The water treatment system 10 is energized using power from the solar panel and/or the energy storage. The provision of a solar panel and an energy storage connected to the solar panel enables true off-grid operation of the water treatment system. In other embodiments, the solar panel and the energy storage may alternatively be omitted, wherein the water treatment system is instead energized by mains electricity.

## Claims

1. A slow sand filter (1) comprising:
an inlet (2) for water to be filtered;
an overflow outlet (3) for overflow of filtered water at a filter water overflow level (L1);
a fluid path (4) between the inlet (2) and the overflow outlet (3), wherein granular filter media (5) is provided throughout the fluid path (4) for filtering of water flowing from the inlet (2) to the overflow outlet (3);
a biolayer formed on top of the filter media;
an outer container (6) and an inner wall structure (7) provided inside the outer container (6) wherein the outer container (6) and the inner wall structure (7) together define a meandering fluid path portion of the fluid path (4) between the inlet (2) and the overflow outlet (3), wherein the inner wall structure (7) is funnel-shaped with a wider upper portion and a narrower lower portion emanating in a lower portion of the outer container (6), and wherein the overflow outlet (3) is provided in an upper portion of the outer container (6), and
a diffuser (8) for incoming water, wherein the diffuser (8) comprises a sheet layer (9) having a lower density than water and wherein the sheet layer (9) is shaped to fit within the inlet (2) of the slow sand filter (1) such that the sheet layer (9) is capable of floating above the filter media (5) on top of the water and above any biolayer formed on said filter media (5), wherein the diffuser (8) is provided with a plurality of holes (18) for water to flow through on its way from the inlet (2) to the filter media (5).

2. A slow sand filter (1) according to claim 1, wherein the filter water overflow level (L1) is higher than the top of the filter media (5).

3. A water treatment system (10) comprising:
a raw water container (11) suitable for receiving and holding raw water to be treated,
a slow sand filter (1) according to any one of claims 1-2,
a potable water container (12) suitable for receiving and holding potable water,
a pump (13) configured to pump water from the raw water container (11) to the inlet (2) of the slow sand filter (1),
a UV-light sanitizer (14) connected to the overflow outlet (3) of the slow sand filter (1),
a water quality sensor (15) connected to an outlet of the UV-light sanitizer (14), and
a valve assembly (16) connected to the water quality sensor (15) and configured to selectively, based on a control signal, direct filtered water downstream of the water quality sensor (15) either
a) to a first fluid path to the raw water container (11), or
b) to a second fluid path to the potable water container (12).

4. A water treatment system (10) according to claim 3, further comprising a controller (17) configured to determine, based on information from the water quality sensor (15), if the water currently flowing through the water quality sensor (15) is potable or not potable and to control the valve assembly (16) such that filtered water is routed to the potable water container (12) if the filtered water is determined to be potable and such that filtered water is otherwise routed to the raw water container (11).

5. A water treatment system (10) according to claim 4, wherein the potable water container (12) is provided with an overflow outlet fluidly connected to the raw water container (11) for overflow at a potable water overflow level (L2), wherein the raw water container (11) is provided with an overflow outlet for overflow at a raw water overflow level (L4) which is lower than the potable water overflow level (L2).

6. A water treatment system (10) according to claim 5, wherein the filter water overflow level (L1) is higher than the potable water overflow level (L2).

7. A water treatment system (10) according to any one of claims 5 and 6, wherein the first fluid path emanates at a third water level (L3) in the raw water container (11), wherein the third water level (L3) is above the raw water overflow level (L4) and below the potable water overflow level (L2).

8. A water treatment system (10) according to any one of claims 4-7, wherein the slow sand filter (1) is provided with a first water level sensor (19) configured to determine at least if the water level is above a predetermined lower filter water level (FTL) and optionally to also detect if the water level is above a predetermined upper filter water level (FTH),
wherein the controller (17) is configured to activate the pump (13) upon detecting that the water level is below the lower filter water level (FTL),
wherein the controller (17) is configured to deactivate the pump (13) either after a predetermined period of time has elapsed, or upon detecting that the water level has reached the predetermined upper filter water level (FTH) should the first water level sensor also be configured to determine if the water level exceeds the upper filter water level (FTH).

9. A water treatment system (10) according to any one of claims 4-8, wherein the raw water container (11) is provided with a second water level sensor (20) configured to determine at least if the water level in the raw water container (11) exceeds or subceeds a predetermined lower raw water level (RTL), wherein the controller (17) is configured to disable operation of the pump (13) upon said water level subceeding the lower raw water level (RTL).

10. A water treatment system (10) according to claim 8 or claim 9 dependent on claim 8, wherein the first water level sensor(19) is also configured to detect if the water level is above the predetermined upper filter water level (FTH), wherein the controller (17) is configured to measure the dwell time needed for the water filter to sink from the upper filter water level (FTH) to the predetermined lower filter water level (FTL).

11. A water treatment system (10) according to claim 10, wherein the controller (17) is configured to determine a health parameter for the health of the biolayer based on the dwell time.

12. A water treatment system (10) according to claim 11, wherein the controller (17) is configured to control the UV-light sanitizer (14) at least based on the health parameter such that the UV-light sanitizer (14) is disabled when the health parameter indicates that the biolayer is healthy.

13. A water treatment system (10) according to claims 4-12, wherein the controller (17) is configured to disable the UV-light sanitizer (14) when there is no flow of water through the UV-light sanitizer (14).

14. A water treatment system (10) according to any one of claims 4-13, wherein the controller(17) is configured to measure time elapsed from when the slow sand filter (1) was last cleaned and to emit a cleaning signal when the time elapsed is greater than a predetermined cleaning alert interval.

15. A water treatment system (10) according to any one of claims 4-' 14, wherein the controller (17) is
a) configured to keep track of the average age of water in the potable water container (12) and to activate the pump (13) if the average age is higher than a predetermined age limit, or
b) configured to activate the pump (13) according to a predetermined operation pattern in order to circulate water through the potable water container, or
c) configured to activate the pump (13) if the water level in the potable water container (12) is below a predetermined lower potable water level (PTL).

## Patentansprüche

1. Langsamsandfilter (1), der Folgendes umfasst:
einen Einlass (2) für zu filterndes Wasser;
einen Überlaufauslass (3) zum Überlaufen von gefiltertem Wasser bei einem Filterwasser-Überlaufpegel (L1);
einen Fluidpfad (4) zwischen dem Einlass (2) und dem Überlaufauslass (3), wobei Granulat-Filtermaterial (5) im gesamten Fluidpfad (4) zum Filtern des vom Einlass (2) zum Überlaufauslass (3) fließenden Wassers vorgesehen ist;
eine Bioschicht, die auf dem Filtermaterial gebildet ist;
einen äußeren Behälter (6) und eine Innenwandstruktur (7), die innerhalb des äußeren Behälters (6) vorgesehen ist, wobei der äußere Behälter (6) und die Innenwandstruktur (7) zusammen einen mäanderförmigen Fluidpfadabschnitt des Fluidpfads (4) zwischen dem Einlass (2) und dem Überlaufauslass (3) definieren, wobei die Innenwandstruktur (7) trichterförmig ist mit einem breiteren oberen Abschnitt und einem schmaleren unteren Abschnitt, der in einen unteren Abschnitt des äußeren Behälters (6) mündet, und wobei der Überlaufauslass (3) in einem oberen Abschnitt des äußeren Behälters (6) vorgesehen ist, und
einen Diffusor (8) für einlaufendes Wasser, wobei der Diffusor (8) eine Deckschicht (9) umfasst, die eine geringere Dichte als Wasser aufweist, und wobei die Deckschicht (9) so geformt ist, dass sie derart in den Einlass (2) des Langsamsandfilters (1) passt, dass die Deckschicht (9) über dem Filtermaterial (5) auf der Oberseite des Wassers und über jeder auf dem Filtermaterial (5) gebildeten Bioschicht schwimmen kann, wobei der Diffusor (8) mit einer Vielzahl von Löchern (18) für das Wasser versehen ist, damit es auf seinem Weg vom Einlass (2) zum Filtermaterial (5) dort hindurchfließt.

2. Langsamsandfilter (1) nach Anspruch 1, wobei der Filterwasser-Überlaufpegel (L1) höher ist als die Oberseite des Filtermaterials (5).

3. Wasseraufbereitungssystem (10), das Folgendes umfasst:
einen Betriebswasserbehälter (11), der zum Aufnehmen und Halten von zu behandelndem Betriebswasser geeignet ist,
einen Langsamsandfilter (1) nach einem der Ansprüche 1-2,
einen Trinkwasserbehälter (12), der zum Aufnehmen und Halten von Trinkwasser geeignet ist,
eine Pumpe (13), die dazu konfiguriert ist, Wasser aus dem Betriebswasserbehälter (11) zum Einlass (2) des Langsamsandfilters (1) zu pumpen,
eine UV-Licht-Desinfektionsvorrichtung (14), die mit dem Überlaufauslass (3) des Langsamsandfilters (1) verbunden ist,
ein Wasserqualitätssensor (15), der mit einem Auslass der UV-Licht-Desinfektionsvorrichtung (14) verbunden ist, und
eine Ventilbaugruppe (16), die mit dem Wasserqualitätssensor (15) verbunden und dazu konfiguriert ist, gefiltertes Wasser auf Basis eines Steuersignals selektiv stromabwärts des Wasserqualitätssensors (15) entweder
a) zu einem ersten Fluidpfad zum Betriebswasserbehälter (11) oder
b) zu einem zweiten Fluidpfad zum Trinkwasserbehälter (12) zu leiten.

4. Wasseraufbereitungssystem (10) nach Anspruch 3, das ferner eine Steuerung (17) umfasst, die dazu konfiguriert ist, auf Basis von Informationen vom Wasserqualitätssensor (15) zu bestimmen, ob das aktuell durch den Wasserqualitätssensor (15) fließende Wasser trinkbar oder nicht trinkbar ist, und die Ventilbaugruppe (16) derart zu steuern, dass gefiltertes Wasser zum Trinkwasserbehälter (12) geleitet wird, wenn bestimmt wird, dass das gefilterte Wasser trinkbar ist, und derart, dass gefiltertes Wasser andernfalls zum Betriebswasserbehälter (11) geleitet wird.

5. Wasseraufbereitungssystem (10) nach Anspruch 4, wobei der Trinkwasserbehälter (12) mit einem Überlaufauslass versehen ist, der mit dem Betriebswasserbehälter (11) fluidisch verbunden ist, um bei einem Trinkwasser-Überlaufpegel (L2) überzulaufen, wobei der Betriebswasserbehälter (11) mit einem Überlaufauslass zum Überlaufen bei einem Betriebswasser-Überlaufpegel (L4) versehen ist, der niedriger ist als der Trinkwasser-Überlaufpegel (L2).

6. Wasseraufbereitungssystem (10) nach Anspruch 5, wobei der Filterwasser-Überlaufpegel (L1) höher ist als der Trinkwasser-Überlaufpegel (L2).

7. Wasseraufbereitungssystem (10) nach einem der Ansprüche 5 und 6, wobei der erste Fluidpfad bei einem dritten Wasserpegel (L3) in den Betriebswasserbehälter (11) mündet, wobei der dritte Wasserpegel (L3) über dem Betriebswasser-Überlaufpegel (L4) und unter dem Trinkwasser-Überlaufpegel (L2) liegt.

8. Wasseraufbereitungssystem (10) nach einem der Ansprüche 4-7, wobei der Langsamsandfilter (1) mit einem ersten Wasserpegelsensor (19) versehen ist, der dazu konfiguriert ist, zumindest zu bestimmen, ob der Wasserpegel über einem vorbestimmten unteren Filterwasserpegel (FTL) liegt, und optional auch zu detektieren, ob der Wasserpegel über einem vorbestimmten oberen Filterwasserpegel (FTH) liegt,
wobei die Steuerung (17) dazu konfiguriert ist, die Pumpe (13) beim Detektieren, dass der Wasserpegel unter dem unteren Filterwasserpegel (FTL) liegt, zu aktivieren,
wobei die Steuerung (17) dazu konfiguriert ist, die Pumpe (13) entweder nach Ablauf einer vorbestimmten Zeitspanne oder beim Detektieren, dass der Wasserpegel den vorbestimmten oberen Filterwasserpegel (FTH) erreicht hat, zu deaktivieren, falls der erste Wasserstandsensor auch dazu konfiguriert ist, zu bestimmen, ob der Wasserpegel den oberen Filterwasserpegel (FTH) überschreitet.

9. Wasseraufbereitungssystem (10) nach einem der Ansprüche 4-8, wobei der Betriebswasserbehälter (11) mit einem zweiten Wasserpegelsensor (20) versehen ist, der dazu konfiguriert ist, zumindest zu bestimmen, ob der Wasserpegel im Betriebswasserbehälter (11) einen vorbestimmten unteren Betriebswasserpegel (RTL) überschreitet oder unterschreitet, wobei die Steuerung (17) dazu konfiguriert ist, den Betrieb der Pumpe (13) zu deaktivieren, wenn der Wasserpegel den unteren Betriebswasserpegel (RTL) unterschreitet.

10. Wasseraufbereitungssystem (10) nach Anspruch 8 oder Anspruch 9 abhängig von Anspruch 8, wobei der erste Wasserpegelsensor (19) auch dazu konfiguriert ist, zu detektieren, ob der Wasserpegel über dem vorbestimmten oberen Filterwasserpegel (FTH) liegt, wobei die Steuerung (17) dazu konfiguriert ist, die Verweilzeit zu messen, die der Wasserfilter benötigt, um vom oberen Filterwasserpegel (FTH) auf den vorbestimmten unteren Filterwasserpegel (FTL) abzusinken.

11. Wasseraufbereitungssystem (10) nach Anspruch 10, wobei die Steuerung (17) dazu konfiguriert ist, einen Gesundheitsparameter für die Gesundheit der Bioschicht auf Basis der Verweilzeit zu bestimmen.

12. Wasseraufbereitungssystem (10) nach Anspruch 11, wobei die Steuerung (17) dazu konfiguriert ist, die UV-Licht-Desinfektionsvorrichtung (14) zumindest auf Basis des Gesundheitsparameters derart zu steuern, dass die UV-Licht-Desinfektionsvorrichtung (14) deaktiviert wird, wenn der Gesundheitsparameter angibt, dass die Bioschicht gesund ist.

13. Wasseraufbereitungssystem (10) nach den Ansprüchen 4-12, wobei die Steuerung (17) dazu konfiguriert ist, die UV-Licht-Desinfektionsvorrichtung (14) zu deaktivieren, wenn kein Wasserströmung durch die UV-Licht-Desinfektionsvorrichtung (14) vorhanden ist.

14. Wasseraufbereitungssystem (10) nach einem der Ansprüche 4-13, wobei die Steuerung (17) dazu konfiguriert ist, die Zeit zu messen, die seit der letzten Reinigung des Langsamsandfilters (1) verstrichen ist, und ein Reinigungssignal auszusenden, wenn die verstrichene Zeit größer ist als ein vorbestimmtes Reinigungsalarmintervall.

15. Wasseraufbereitungssystem (10) nach einem der Ansprüche 4-14, wobei die Steuerung (17)
a) dazu konfiguriert ist, das Durchschnittsalter des Wassers im Trinkwasserbehälter (12) nachzuverfolgen und die Pumpe (13) zu aktivieren, wenn das Durchschnittsalter höher ist als eine vorbestimmte Altersgrenze, oder
b) dazu konfiguriert ist, die Pumpe (13) gemäß einem vorbestimmten Betriebsmuster zu aktivieren, um Wasser durch den Trinkwasserbehälter zu zirkulieren, oder
c) dazu konfiguriert ist, die Pumpe (13) zu aktivieren, wenn der Wasserpegel im Trinkwasserbehälter (12) unter einem vorbestimmten unteren Trinkwasserpegel (PTL) liegt.

## Revendications

1. Filtre à sable lent (1) comprenant :
une entrée (2) pour l'eau destinée à être filtrée ;
une sortie de débordement (3) pour le débordement d'eau filtrée à un niveau de débordement d'eau de filtre (L1) ;
un trajet de fluide (4) entre l'entrée (2) et la sortie de débordement (3), dans lequel un milieu de filtrage granulaire (5) est disposé dans l'ensemble du trajet de fluide (4) pour filtrer de l'eau s'écoulant à partir de l'entrée (2) vers la sortie de débordement (3) ;
une couche biologique formée sur le milieu de filtrage ;
un récipient extérieur (6) et une structure de paroi intérieure (7) disposée dans le récipient extérieur (6), où le récipient extérieur (6) et la structure de paroi intérieure (7) définissent conjointement une partie de trajet de fluide sinueux du trajet de fluide (4) entre l'entrée (2) et la sortie de débordement (3), dans lequel la structure de paroi intérieure (7) présente une forme d'entonnoir avec une partie supérieure plus large et une partie inférieure plus étroite débouchant dans une partie inférieure du récipient extérieur (6), et dans lequel la sortie de débordement (3) est disposée dans une partie supérieure du récipient extérieur (6), et
un diffuseur (8) pour l'eau entrante, dans lequel le diffuseur (8) comprend une couche en feuille (9) présentant une densité inférieure à celle de l'eau et dans lequel la couche en feuille (9) est formée de manière à s'ajuster dans l'entrée (2) du filtre à sable lent (1) de telle façon que la couche en feuille (9) peut flotter au-dessus du milieu de filtrage (5) sur l'eau et au-dessus de n'importe quelle couche biologique formée sur ledit milieu de filtrage (5), dans lequel le diffuseur (8) est doté d'une pluralité de trous (18) à travers lesquels l'eau peut s'écouler sur son chemin entre l'entrée (2) et le milieu de filtrage (5).

2. Filtre à sable lent (1) selon la revendication 1, dans lequel le niveau de débordement d'eau de filtre (L1) est plus élevé que le haut du milieu de filtrage (5).

3. Système de traitement d'eau (10) comprenant :
un récipient d'eau brute (11) adapté pour recevoir et contenir de l'eau brute destinée à être traitée,
un filtre à sable lent (1) selon l'une quelconque des revendications 1 à 2,
un récipient d'eau potable (12) adapté pour recevoir et contenir de l'eau potable,
une pompe (13) configurée pour pomper de l'eau à partir du récipient d'eau brute (11) vers l'entrée (2) du filtre à sable lent (1),
un assainisseur à lumière UV (14) relié à la sortie de débordement (3) du filtre à sable lent (1),
un capteur de qualité d'eau (15) relié à une sortie de l'assainisseur à lumière UV (14), et
un ensemble de soupape (16) relié au capteur de qualité d'eau (15) et configuré pour diriger sélectivement, sur la base d'un signal de commande, de l'eau filtrée en aval du capteur de qualité d'eau (15), soit
a) vers un premier trajet de fluide vers le récipient d'eau brute (11), ou
b) vers un deuxième trajet de fluide vers le récipient d'eau potable (12).

4. Système de traitement d'eau (10) selon la revendication 3, comprenant en outre un moyen de commande (17) configuré pour déterminé, sur la base d'informations provenant du capteur de qualité d'eau (15), si l'eau s'écoulant actuellement à travers le capteur de qualité d'eau (15) est potable ou non potable et pour commander l'ensemble de soupape (16) de manière à ce que l'eau filtrée soit acheminée vers le récipient d'eau potable (12) si l'eau filtrée est déterminée comme potable et de manière à ce que l'eau filtrée soit autrement acheminée vers le récipient d'eau brute (11).

5. Système de traitement d'eau (10) selon la revendication 4, dans lequel le récipient d'eau potable (12) est doté d'une sortie de débordement reliée fluidiquement au récipient d'eau brute (11) pour le débordement à un niveau de débordement d'eau potable (L2), dans lequel le récipient d'eau brute (11) est doté d'une sortie de débordement pour le débordement à un niveau de débordement d'eau brute (L4), lequel est inférieur au niveau de débordement d'eau potable (L2).

6. Système de traitement d'eau (10) selon la revendication 5, dans lequel le niveau de débordement d'eau de filtre (L1) est supérieur au niveau de débordement d'eau potable (L2).

7. Système de traitement d'eau (10) selon l'une quelconque des revendications 5 et 6, dans lequel le premier trajet de fluide débouche à un troisième niveau d'eau (L3) dans le récipient d'eau brute (11), dans lequel le troisième niveau d'eau (L3) est au-dessus du niveau de débordement d'eau brute (L4) et en dessous du niveau de débordement d'eau potable (L2).

8. Système de traitement d'eau (10) selon l'une quelconque des revendications 4 à 7, dans lequel le filtre à sable lent (1) est doté d'un premier capteur de niveau d'eau (19) configuré pour déterminer au moins si le niveau d'eau est au-dessus d'un niveau d'eau de filtre inférieur prédéterminé (FTL) et optionnellement pour détecter également si le niveau d'eau est au-dessus d'un niveau d'eau de filtre supérieur prédéterminé (FTH),
dans lequel le moyen de commande (17) est configuré pour activer la pompe (13) lors de la détection que le niveau d'eau est en dessous du niveau d'eau de filtre inférieur prédéterminé (FTL),
dans lequel le moyen de commande (17) est configuré pour désactiver la pompe (13) soit après l'écoulement d'une période de temps prédéterminée, ou lors de la détection que le niveau d'eau a atteint le niveau d'eau de filtre supérieur prédéterminé (FTH) dans le cas où le premier capteur de niveau d'eau est également configuré pour déterminer si le niveau d'eau dépasse le niveau d'eau de filtre supérieur prédéterminé (FTH).

9. Système de traitement d'eau (10) selon l'une quelconque des revendications 4 à 8, dans lequel le récipient d'eau brute (11) est doté d'un deuxième capteur de niveau d'eau (20) configuré pour déterminer au moins si le niveau d'eau dans le récipient d'eau brute (11) est au-dessus ou en dessous d'un niveau d'eau brute inférieur prédéterminé (RTL), dans lequel le moyen de commande (17) est configuré pour désactiver le fonctionnement de la pompe (13) lorsque ledit niveau d'eau est en dessous du niveau d'eau brute inférieur (RTL).

10. Système de traitement d'eau (10) selon la revendication 8 ou la revendication 9 dépendante de la revendication 8, dans lequel le premier capteur de niveau d'eau (19) est également configuré pour détecter si le niveau d'eau est au-dessus du niveau d'eau de filtre supérieur prédéterminé (FTH), dans lequel le moyen de commande (17) est configuré pour mesurer le temps de passage nécessaire à l'eau de filtre pour descendre du niveau d'eau de filtre supérieur (FTH) jusqu'au niveau d'eau de filtre inférieur prédéterminé (FTL).

11. Système de traitement d'eau (10) selon la revendication 10, dans lequel le moyen de commande (17) est configuré pour déterminer un paramètre sanitaire pour la santé de la couche biologique sur la base du temps de passage.

12. Système de traitement d'eau (10) selon la revendication 11, dans lequel le moyen de commande (17) est configuré pour commander l'assainisseur à lumière UV (14) au moins sur la base du paramètre sanitaire de manière à ce que l'assainisseur à lumière UV (14) soit désactivé lorsque le paramètre sanitaire indique que la couche biologique est saine.

13. Système de traitement d'eau (10) selon les revendications 4 à 12, dans lequel le moyen de commande (17) est configuré pour désactiver l'assainisseur à lumière UV (14) en l'absence d'écoulement d'eau à travers l'assainisseur à lumière UV (14).

14. Système de traitement d'eau (10) selon l'une quelconque des revendications 4 à 13, dans lequel le moyen de commande (17) est configuré pour mesurer le temps écoulé depuis le dernier nettoyage du filtre à sable lent (1) et pour émettre un signal de nettoyage lorsque le temps écoulé est supérieur à un intervalle d'alerte de nettoyage prédéterminé.

15. Système de traitement d'eau (10) selon l'une quelconque des revendications 4 à 14, dans lequel le moyen de commande (17) est
a) configuré pour assurer le suivi de l'âge moyen de l'eau dans le récipient d'eau potable (12) et pour activer la pompe (13) si l'âge moyen est supérieur à une limite d'âge prédéterminée, ou
b) configuré pour activer la pompe (13) selon un schéma de fonctionnement prédéterminé afin de faire circuler de l'eau à travers le récipient d'eau potable, ou
c) configuré pour activer la pompe (13) si le niveau d'eau dans le récipient d'eau potable (12) est en dessous d'un niveau d'eau potable inférieur prédéterminé (PTL).
